# EUROPÄISCHE PATENTSCHRIFT

(11) **EP 1 859 236 B1**
(45) Veröffentlichungstag und Bekanntmachung des Hinweises auf die Patenterteilung: **20.02.2019**
(21) Anmeldenummer: 06722603.5
(22) Anmeldetag: 14.03.2006
(51) Int. Cl.: G01F 23/296

(54) **VORRICHTUNG ZUM MESSEN DES FÜLLSTANDES EINER FLÜSSIGKEIT IN EINEM BEHÄLTER MIT EINEM ULTRASCHALLWANDLER**
DEVICE FOR MEASURING THE LEVEL OF A LIQUID IN A CONTAINER BY MEANS OF AN ULTRASONIC CONVERTER
DISPOSITIF DE MESURE DU NIVEAU D'UN LIQUIDE DANS UN CONTENANT AU MOYEN D'UN TRANSDUCTEUR A ULTRASONS

(30) Priorität: 18.03.2005 DE 102005012566
(43) Veröffentlichungstag der Anmeldung: 28.11.2007
(73) Patentinhaber: HELLA GmbH & Co. KGaA, 59552 Lippstadt (DE)
(72) Erfinder: KÜCK, Thomas, 28844 Weyhe (DE); DOBRINSKI, Heiko, 28359 Bremen (DE); BUHRDORF, Andreas, 28329 Bremen (DE)
(74) Vertreter: Siekmann, Gunnar
(86) Internationale Anmeldenummer: PCT/DE2006/000446
(87) Internationale Veröffentlichungsnummer: WO 2006/097076

(56) Entgegenhaltungen:
- DE-A1- 10 259 809
- DE-A1- 10 331 566
- US-A- 4 656 384
- US-A- 4 984 449
- US-A- 5 379 658
- US-A- 5 568 449

## Beschreibung

Die Erfindung betrifft eine Vorrichtung aufweisend einen Behälter und einen mit einem Ultraschallwandler zum Messen des Füllstandes einer Flüssigkeit nach dem Ultraschall-Echo-Prinzip in dem Behälter mit den Merkmalen des Oberbegriffs des Patentanspruchs 1.

Eine gattungsgemäße Vorrichtung ist aus der US 5,568,449 A bekannt.

Nach der US 4,984,449 A oder der US 5,568,449 A sind Flüssigkeitsfüllstandsmesssysteme bekannt, die rohrförmige Ultraschallmesskörper aufweisen, die in vertikaler Richtung von oben in einen Flüssigkeitsbehälter eingesetzt werden. Innerhalb des Messkörpers ist ein Ultraschallwandler im Abstand zum unteren Ende des Messkörpers angeordnet. Der Ultraschallwandler sendet vertikal nach oben und vertikal nach unten Ultraschallimpulse aus, mit denen die Füllstandshöhe der Flüssigkeit im Behälter ermittelt wird. Gleichzeitig erfolgt eine Referenzmessung in Richtung der Flüssigkeitsoberfläche, wobei oberhalb des Ultraschallwandlers in vorgegebenen Abständen Kalibrierreflektoren angeordnet sind.

Aus der DE 103 31 566 A1 ist eine Vorrichtung zum Messen des Füllstandes einer Flüssigkeit nach dem Ultraschall-Echo-Prinzip in einem Behälter mit einem Ultraschallwandler bekannt, wobei der Ultraschallwandler mit Abstand zu einer reflektierenden Fläche angeordnet ist und einerseits zur Abstrahlung zur Flüssigkeitsoberfläche und andererseits zu der reflektierenden Fläche ausgelegt ist, wobei die Vorrichtung am Boden eines Behälters angeordnet ist.

Eine weitere Vorrichtung ist beispielsweise aus der EP 1 460 396 bekannt. Bei dieser Vorrichtung erfolgt die Auswertung dadurch, dass infolge von Mehrfachreflexionen an der Flüssigkeitsoberfläche und im Bereich des Behälterbodens in Peaks gesplittete Echosignale erfasst werden und dass die aus dem bestimmten Abstand resultierenden zeitlichen Abstände der Peaks zur Bestimmung der Schallgeschwindigkeit in der Flüssigkeit ausgewertet werden.

Nach der DE 2 59 809 A1 ist eine Einrichtung zur Füllstandsmessung in einem Kraftstofftank bekannt, die mit einem Ultraschallwandler ausgerüstet ist. Der Ultraschallwandler weist jeweils einen Messabschnitt und einen Referenzabschnitt auf, wobei mittels des Messabschnittes der Füllstand im Kraftstofftank und mit Hilfe des Referenzabschnittes eine Referenzmessung durchgeführt wird. Beide Messungen erfolgen von der Oberseite des Ultraschallwandlers aus in Richtung der Oberfläche der Flüssigkeit. Die zur Referenzmessung benötigten Reflektionsflächen werden mit Hilfe von Gehäuseabschnitten ausgebildet, welche über die Referenzabschnitte des Ultraschallwandlers vorstehen.

Die US 5,379,658 A offenbart ein Füllstandsmessgerät mit einem Schallwandler, der über eine Flanschanordnung in einer Öffnung an der Unterseite eines Tanks abdichtend montiert ist. Der Schallwandler ist mit seiner Sensorfläche akustisch mit der Flüssigkeit gekoppelt, wobei der Schallwandler nur Schallwellen zur Bestimmung der Füllstandshöhe in Richtung der Flüssigkeitsoberfläche aussendet.

Der Erfindung liegt die Aufgabe zugrunde, eine Vorrichtung der eingangs genannten Art zu schaffen, die besonders einfach aufgebaut ist und eine besonders zuverlässige Messung nach dem Ultraschall-Echo-Prinzip erlaubt.

Die Lösung dieser Aufgabe erfolgt mit einer Vorrichtung mit den Merkmalen des Patentanspruchs 1. Vorteilhafte Weiterbildungen der Erfindung sind in den Unteransprüchen angegeben.

Bei einer Vorrichtung zum Messen des Füllstands einer Flüssigkeit nach dem Ultraschall-Echo-Prinzip in einem Behälter mit einem Ultraschallwandler, bei dem der Ultraschallwandler mit Abstand zu einer im Bodenbereich des Behälters angeordneten reflektierenden Fläche angeordnet ist und einerseits zur Abstrahlung zu der Flüssigkeitsoberfläche und andererseits zu der reflektierenden Fläche ausgelegt ist, ist es vorgesehen, dass unterhalb des Ultraschallwandlers eine Vertiefung im Boden der Vorrichtung angeordnet ist. Der Boden des Behälters, genauer der Boden innerhalb dieser Vertiefung, dient dann als reflektierende Fläche oder als Reflektor. Die Vertiefung definiert eine Referenzstrecke. Auf diese Weise ist es möglich, eine feste Referenzstrecke zur Vergleichsmessung heranzuziehen und die Referenzstrecke unabhängig von der eigentlichen Messstrecke auszubilden und auf diese Weise zu erreichen, dass die beiden Messungen sich gegenseitig möglichst wenig beeinflussen. Nach der Erfindung ist die Vorrichtung als Flansch zur Montage an die Unterseite eines Flüssigkeitsbehälters, insbesondere einer Ölwanne, ausgebildet. Der Flansch besteht bevorzugt aus einer Flanschgruppe mit einem Dichtungsring, einer Referenzstrecke und einem Ultraschallwandler einschließlich der Schaltungstechnik, die in einem integrierten Schaltkreis angeordnet ist.

Unter einem Ultraschallwandler wird jede Vorrichtung zur Umwandlung eines Signals in eine Ultraschallschwingung und umgekehrt verstanden. Der Ultraschallwandler wird bevorzugt als Sender und als Empfänger verwendet. Es ist jedoch auch denkbar, den erfindungsgemäßen Ultraschallwandler nur als Sender zu verwenden und einen baulich davon getrennten Empfänger zu verwenden. Der Ultraschallwandler ist bevorzugt als piezoelektrischer Wandler ausgebildet. Insbesondere werden hierfür piezoelektrische Keramiken oder auch piezoelektrische Kristalle verwendet. In einer anderen bevorzugten Ausgestaltung der Erfindung sind der Sender und der Empfänger und bevorzugt auch eine Auswerteeinheit in einem Gehäuse, in dem auch ein integrierter Schaltkreis, insbesondere im vorliegenden Fall ein ASIC, angeordnet ist. Das Gehäuse ist dabei bevorzugt aus Plastikmaterial oder einem Polymer ausgebildet.

In einer anderen Ausgestaltung der Erfindung ist der Sender in einem Gehäuse angeordnet, das eine Ausnehmung mit Öffnungen nach oben und unten aufweist. In einer bevorzugten Ausgestaltung der Erfindung sendet die Vorrichtung den Ultraschall mit einer größeren Leistung nach oben als nach unten. Hierzu werden bevorzugt Gehäuseanpassungen vorgenommen, insbesondere werden in dem Gehäuse nach oben und nach unten unterschiedlich große Öffnungen vorgesehen. Denkbar sind auch andere Anpassungen, wie beispielsweise die Einbauart des Ultraschallwandlers im Gehäuse oder die Verwendung von Dämpfungselementen. Günstigerweise ist dazu in dem Gehäuse die untere bzw. die zur Referenzstrecke gerichtete Öffnung kleiner als die obere bzw. die zur Flüssigkeitsoberfläche gerichtete Öffnung ausgebildet. In dem Gehäuse ist eine Ausnehmung vorgesehen, in die bevorzugt von oben herein der Ultraschallwandler bzw. insbesondere ein Piezokristall formschlüssig eingelegt wird. Alternativ kann der Ultraschallwandler auf einen Metallrahmen, insbesondere ein Stanzgitter oder "Leadframe" montiert und anschließend mit einem Plastikmaterial umhüllt oder verkapselt werden. Zur besseren Auskopplung des Ultraschalls kann hierbei die Oberfläche des Ultraschallwandlerelementes von dem Gehäusematerial ausgeschlossen werden. Hierzu wird eine Herstellungstechnologie verwendet, bei der die gesamte aktive Oberfläche des Ultraschallwandlers oder zumindest Teilbereiche davon vom Gehäusematerial freigehalten werden. Die untere wie auch die obere Öffnung sind bevorzugt entsprechend der abzustrahlenden Leistung dimensioniert, wobei die obere, zur Flüssigkeitsoberfläche gerichtete Öffnung bevorzugt die gleiche Größe wie der Ultraschallwandler bzw. dessen aktive Oberfläche aufweist, um eine maximale Sendeleistung zu erreichen. In dem Bauteil selbst ist bevorzugt außerdem eine Einrichtung zur Temperaturerfassung vorgesehen. Diese ist bevorzugt als ASIC mit Temperaturerfassung ausgebildet. Weiterhin sind passive elektrische Komponenten, wie Kondensatoren, Widerstände, Dioden, Transistoren, Varistoren und/oder Spulen in dem Gehäuse angeordnet.

Der integrierte Schaltkreis, insbesondere der ASIC, dient außerdem zur Signalansteuerung und Verarbeitung der empfangenen Signale. Das Gehäuse, das auch als Multichipmodul bezeichnet werden kann, ist zudem bevorzugt beschichtet, um eine Flüssigkeitsbeständigkeit, insbesondere eine Ölbeständigkeit, des Sensorelementes oder des Ultraschallwandlers zu gewährleisten.

Erfindungsgemäß ist unterhalb des Ultraschallwandlers eine Vertiefung im Boden der Vorrichtung vorgesehen. Dadurch wird ein Echo auf den Empfänger zurückgeleitet und eine Reflexion in andere Bereiche, insbesondere in solche Bereiche, in denen eine Unterscheidung von der von der Oberfläche reflektierten Strahlung nur schwer möglich ist, verhindert. Die Vertiefung ist bevorzugt entsprechend der unteren Abstrahlöffnung im Gehäuse dimensioniert. Die Vertiefung ist erfindungsgemäß kanalartig ausgebildet. Dadurch kann in der Vertiefung ein Durchfluss des zu überprüfenden Mediums erfolgen. Die Vertiefung ist bevorzugt unterhalb einer Montagefläche für das Gehäuse angeordnet. In einer anderen bevorzugten Ausgestaltung der Erfindung ist am Boden der Vorrichtung, insbesondere in der Vertiefung, eine Einrichtung zur Beeinflussung des Ultraschallsignals vorgesehen. Auf diese Weise wird eine Kennung in das Echo eingeprägt, so dass auf diese Weise eine sichere Unterscheidung zwischen dem von der Flüssigkeitsoberfläche reflektierten Signal und dem vom Boden reflektierten Signal möglich ist und die Auswerteelektronik daher die reflektierten Signale zuverlässig unterscheiden kann. In einer bevorzugten Ausgestaltung ist die Einrichtung zur Beeinflussung des Ultraschallsignals als eine Kante ausgebildet. In einer anderen bevorzugten Ausgestaltung ist die Einrichtung zur Beeinflussung des Ultraschallsignals als Schichtstapel ausgebildet. Dadurch kann ein Phasensprung im Referenzsignal erzeugt werden, der eine Eindeutigkeit des Signals bewirkt. Eine andere Möglichkeit der Ausgestaltung der Einrichtung zur Beeinflussung des Ultraschallsignals ist ein zweistufiger und/oder geteilter Referenzreflektor. Insgesamt ergeben sich dann Interferenzeffekte beider Teilechos bei der Überlagerung zu einem charakteristischen Signalbild in Referenzecho.

Alternativ können die Echos vom Referenzreflektor und von der Flüssigkeitsoberfläche auch über die unterschiedlichen Laufzeiten unterschieden werden.

Nachfolgend wird die Erfindung anhand eines in der Zeichnung dargestellten Ausführungsbeispiels weiter erläutert. Im Einzelnen zeigen die schematischen Darstellungen in:
- Fig. 1:: eine schematische Darstellung des Prinzips der erfindungsgemäßen Vorrichtung;
- Fig. 2:: eine schematische Darstellung einer besonderen Ausführung der erfindungsgemäßen Vorrichtung;
- Fig. 3:: eine alternative Ausführungsform der erfindungsgemäßen Vorrichtung zu Figur 2;
- Fig. 4:: eine schematische Darstellung eines Gehäuses der erfindungsgemäßen Vorrichtung mit mehreren darin aufgenommenen Komponenten;
- Fig. 5:: eine perspektivische Ansicht eines speziell angepassten Gehäuses für die erfindungsgemäße Vorrichtung; und
- Fig. 6:: einen Flansch zur Ausbildung der erfindungsgemäßen Vorrichtung und zur Aufnahme eines Gehäuses beispielsweise gemäß der Figuren 4 oder 5.

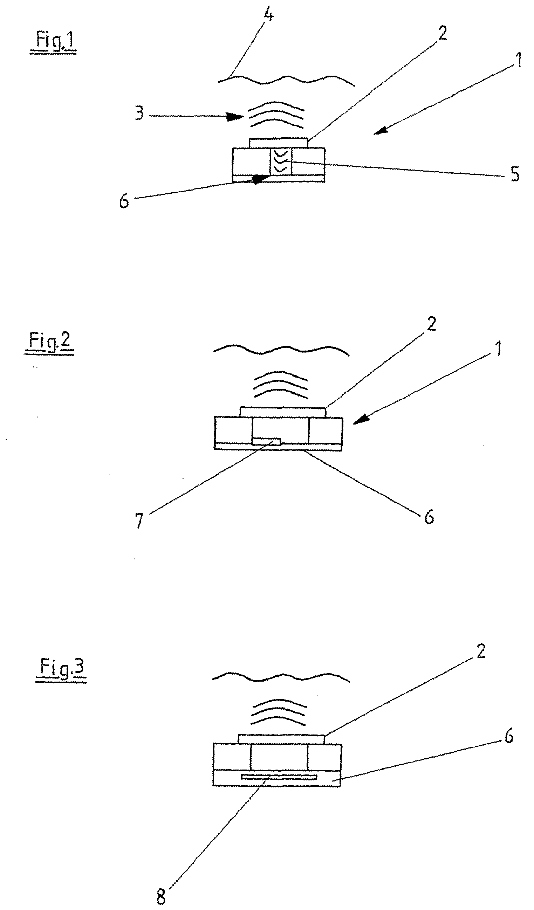

In Fig. 1 ist schematisch eine Vorrichtung 1 mit einem Ultraschallwandler 2 dargestellt, der Schallwellen 3 zu einer Flüssigkeitsoberfläche 4 ausstrahlt. Die Flüssigkeitsoberfläche 4 bildet eine Grenzschicht zwischen dem zu untersuchenden Medium, insbesondere Öl, und einem darüberliegenden Gas, insbesondere Luft. An dieser Grenzschicht erfolgt eine Reflexion der Schallwellen 3, so dass die reflektierte Schallwelle 3 als Echo zurück auf den Ultraschallwandler geworfen wird. Der Ultraschallwandler 2 wird von einer Piezokeramik gebildet, die gleichfalls als Sender und Empfänger dienen kann. Der Ultraschallwandler 2 ist mit Abstand zu einem Boden des Flüssigkeitbehälters, insbesondere des Ölbehälters, angeordnet, so dass von dem Ultraschallwandler 2 auch Schallwellen 5 rückseitig abgestrahlt werden und an einem rückseitigen Reflektor 6, insbesondere am Boden des Behälters, reflektiert werden. In der Fig. 1 ist bereits angedeutet, dass der Ultraschallwandler 2 auf einem Flansch angeordnet ist, in dem ein Kanal oder eine Vertiefung vorgesehen ist, in der die rückseitig abgestrahlten Schallwellen 5 verlaufen und der auf diese Weise eine definierte Referenzstrecke bildet. Der Ultraschallwandler 2 ist direkt von der Flüssigkeit, insbesondere hier vom Öl, umströmt, so dass auch die implementierte Referenzstrecke mit den Schallwellen 5 mit dem Medium Öl gefüllt ist. Der Ultraschallwandler 2 sendet ein zeitlich begrenztes Ultraschallwellenpaket aus. Dieses Wellenpaket wird an der Grenzfläche Öl-Luft reflektiert und wird nach einer Laufzeit t wieder am selben Ultraschallwandler empfangen. Aus der Laufzeit des Wellenpaketes wird die Laufstrecke ermittelt. Die Laufstrecke ist genau doppelt so groß wie die Entfernung zwischen dem Ultraschallwandler und der Grenzfläche zwischen Öl und Luft. Im optimalen Fall ist diese Entfernung gleich dem Füllstand im Flüssigkeitsbehälter, sofern der Ultraschallwandler am Behälterboden montiert, die Sendefläche gleich der Bodenfläche sowie die Reflektionsfläche planparallel zur Sendefläche ist. Für diese Berechnung der Laufstrecke ist die Kenntnis der Schallgeschwindigkeit im Messmedium erforderlich. Diese weist unter anderem eine Abhängigkeit von dem Messmedium und der Temperatur auf. Die Referenzstrecke dient daher dazu, diesen Einfluss zu kompensieren bzw. die Schallgeschwindigkeit zu berechnen. Die nicht genau bekannte Schallgeschwindigkeit wird aus der Laufzeit des an dieser Referenzfläche reflektierten Signals und dem bekannten Abstand der Reflexionsfläche bzw. des rückseitigen Reflektors 6 zum Ultraschallwandler 2 ermittelt.

In Fig. 2 ist als Besonderheit der Vorrichtung 1 eine zusätzliche Kante 7 im rückseitigen Reflektor 6 dargestellt. Diese führt dazu, dass das Echosignal des rückseitigen Reflektors eine eindeutige Kennung erhält und auf diese Weise eindeutig von dem von der Flüssigkeitsoberfläche reflektierten Signal unterschieden werden kann.

Alternativ ist dazu in Fig. 3 im rückseitigen Reflektor 6 ein Schichtstapel 8 angeordnet. Dieser Schichtstapel oder Schichtpaket erzeugt einen Phasensprung im Referenzsignal, der ebenfalls eine Eindeutigkeit hinsichtlich der Unterscheidung des Referenzsignals vom Echosignal der Flüssigkeitsoberfläche gewährleistet.

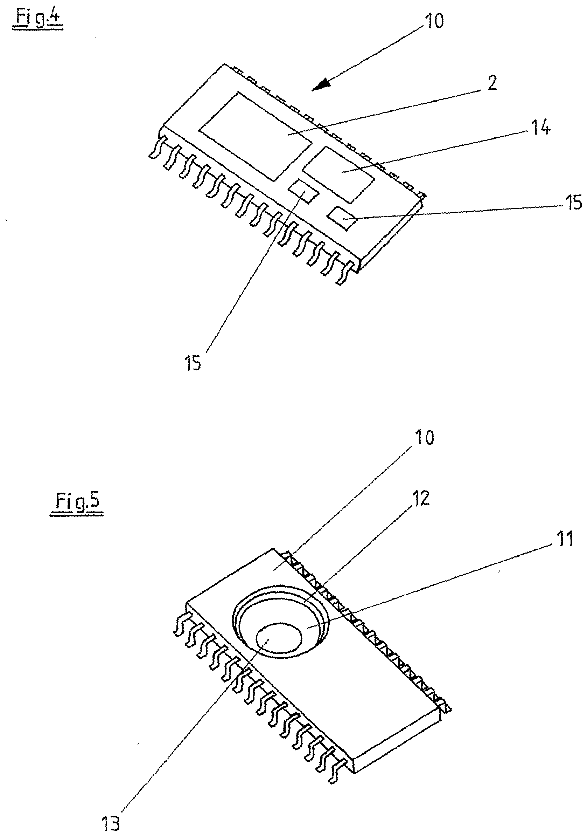

In Fig. 4 ist der Ultraschallwandler 2 dargestellt, der hier in das Gehäuse 10 mit den weiteren Komponenten integriert ist. Dieses Gehäuse ist als Gesamtsensorelement ausgebildet und weist neben dem Ultraschallwandler 2 einen ASIC mit Temperaturerfassung 14 und mehrere passive Komponenten 15 wie beispielsweise Kondensatoren, Widerstände, Dioden, Transistoren, Varistoren und/oder Spulen auf.

In Fig. 5 ist das Gehäuse 10 noch einmal dargestellt, wobei hier die Ausnehmung 11 zur Aufnahme des Ultraschallwandlers 2 dargestellt ist. Auf der Oberseite ist die Ausnehmung 11 vergleichsweise groß und an die Form des aufzunehmenden Ultraschallwandlers 2 angepasst. Im unteren Bereich ist ein Auflageelement in Form eines Ringes 12 vorgesehen, auf dem der Ultraschallwandler positioniert ist, und weiterhin ist eine untere Abschlussschicht vorgesehen, die nur eine vergleichsweise kleine Öffnung 13 freigibt, durch die nur ein kleinerer Anteil der zur Rückseite abgestrahlten Schallwellen nach unten zum rückseitigen Reflektor hindurchtritt. Die Größe dieser Ausnehmung ist derart ausgelegt, dass ein Signal mit der gewünschten Energie nach unten abgestrahlt wird.

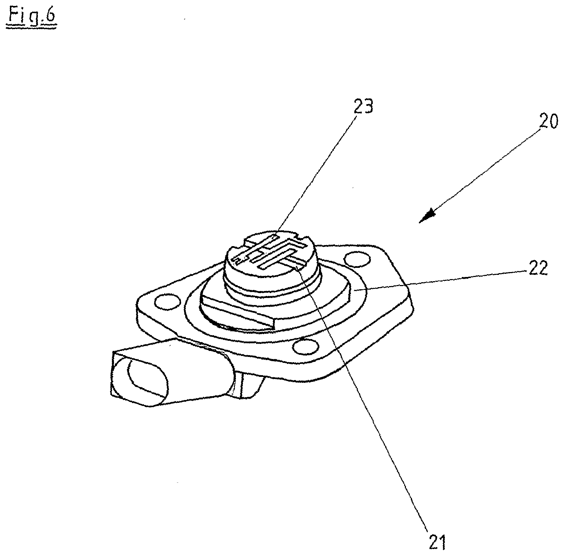

In Fig. 6 ist eine Flanschgruppe 20 dargestellt, die an die Unterseite des Flüssigkeitsbehälters, insbesondere der Ölwanne, montiert werden kann und sich aufgrund einer Öffnung im Flüssigkeitsbehälter in direktem Kontakt mit der Flüssigkeit, insbesondere dem Motoröl, befindet. Eine axiale Gummidichtung 22 schließt das System nach außen dicht ab. Die Flanschgruppe 20 weist eine Montagefläche 23 für das Gehäuse 10 mit dem Ultraschallwandler 2 auf. In der Montagefläche 23 ist eine Vertiefung, die hier als Kanal 21 ausgebildet ist, vorgesehen. Die Breite dieses Kanals 21 ist an die Größe der unteren Öffnung 13 im Gehäuse 10 angepasst.

## Patentansprüche

1. Vorrichtung aufweisend einen Behälter und einen Ultraschallwandler (2) zum Messen des Füllstandes einer Flüssigkeit nach dem Ultraschall-Echo-Prinzip in dem Behälter, wobei der Ultraschallwandler (2) in einem Gehäuse (10) mit Abstand zu einer reflektierenden Fläche (6) angeordnet ist und einerseits zur Abstrahlung zur Flüssigkeitsoberfläche und andererseits zu der reflektierenden Fläche (6) ausgelegt ist,
wobei die reflektierende Fläche (6) unterhalb des Ultraschallwandlers (2) im Boden des Behälters für eine Referenzmessung zwischen dem Ultraschallwandler (2) und der reflektierenden Fläche (6) angeordnet ist,
wobei der Ultraschallwandler (2) mit einer Flanschgruppe (20) mit einem Dichtungsring in einer Öffnung an der Unterseite des Behälters montiert ist. **dadurch gekennzeichnet,**
**dass** die reflektierende Fläche (6) eine kanalartige reflektierende Vertiefung (21) im Boden des Behälters aufweist ist, so dass ein Durchfluss der Flüssigkeit erfolgt,
**dass** die Flanschgruppe (20) eine Montagefläche (23) für das Gehäuse (10) des Ultraschallwandlers (2) aufweist und
**dass** die kanalartige reflektierende Vertiefung (21) unterhalb der Montagefläche (23) angeordnet ist.

2. Vorrichtung nach Anspruch 1, **dadurch gekennzeichnet, dass** der Ultraschallwandler (2) auch als Empfänger dient.

3. Vorrichtung nach einem der Ansprüche 1 oder 2, **dadurch gekennzeichnet, dass** der Ultraschallwandler (2), ein Empfänger und eine Auswerteeinheit in einem Gehäuse integriert sind.

4. Vorrichtung nach einem der vorhergehenden Ansprüche, **dadurch gekennzeichnet, dass** elektronische Komponenten, insbesondere ein ASIC, in dem Gehäuse integriert sind.

5. Vorrichtung nach einem der vorhergehenden Ansprüche, **dadurch gekennzeichnet, dass** das Gehäuse eine Öffnung nach oben und eine Öffnung nach unten zur Aufnahme des Ultraschallwandlers (2) aufweist.

6. Vorrichtung nach Anspruch 5, **dadurch gekennzeichnet, dass** die untere Öffnung (13) und die obere Öffnung (11) unterschiedlich groß ausgebildet sind.

7. Vorrichtung nach einem der Ansprüche 5 oder 6, **dadurch gekennzeichnet, dass** die obere Öffnung (11) und die untere Öffnung (13) entsprechend der abzustrahlenden Leistung dimensioniert sind.

8. Vorrichtung nach einem der Ansprüche 4 bis 7, **dadurch gekennzeichnet, dass** das Gehäuse eine Einrichtung zur Temperaturerfassung (14) aufweist.

9. Vorrichtung nach einem der vorhergehenden Ansprüche, **dadurch gekennzeichnet, dass** am Boden der Vorrichtung, insbesondere in der Vertiefung (21), eine Einrichtung zur Beeinflussung des Ultraschallsignals vorgesehen ist.

10. Vorrichtung nach Anspruch 9, **dadurch gekennzeichnet, dass** die Einrichtung zur Beeinflussung des Ultraschallsignals als Kante (7) ausgebildet ist.

11. Vorrichtung nach Anspruch 9, **dadurch gekennzeichnet, dass** die Einrichtung zur Beeinflussung des Ultraschallsignals als Schichtstapel (8) ausgebildet ist.

## Claims

1. A device comprising a container and an ultrasonic converter (2) for measuring the level of a liquid according to the ultrasonic echo principle in the container,
wherein the ultrasonic converter (2) is arranged in a housing (10) at a distance from a reflective surface (6) and, on the one hand, is designed for radiating toward the liquid surface and, on the other hand, toward the reflective surface (6),
wherein the reflective surface (6) is arranged below the ultrasonic converter (2) in the base of the container for a reference measurement between the ultrasonic converter (2) and the reflective surface (6),
wherein the ultrasonic converter (2) is mounted with a flange assembly (20) with a sealing ring in an opening on the lower face of the container,
**characterised**
**in that** the reflective surface (6) has/is a channel-like reflective recess (21) in the base of the container, so that the liquid flows through,
**in that** the flange assembly (20) comprises a mounting surface (23) for the housing (10) of the ultrasonic converter (2) and
**in that** the channel-like reflective recess (21) is arranged below the mounting surface (23).

2. The device according to Claim 1, **characterised in that** the ultrasonic converter (2) also serves as a receiver.

3. The device according to one of Claims 1 or 2, **characterised in that** the ultrasonic converter (2), a receiver and an evaluation unit are integrated in a housing.

4. The device according to one of the preceding claims, **characterised in that** electronic components, in particular an ASIC, are integrated in the housing.

5. The device according to one of the preceding claims, **characterised in that** the housing has an upward opening and a downward opening for receiving the ultrasonic converter (2).

6. The device according to Claim 5, **characterised in that** the lower opening (13) and the upper opening (11) are configured to be of variable size.

7. The device according to one of Claims 5 or 6, **characterised in that** the upper opening (11) and the lower opening (13) are dimensioned according to the power to be radiated.

8. The device according to one of Claims 4 to 7, **characterised in that** the housing comprises an apparatus for temperature detection (14).

9. The device according to one of the preceding claims, **characterised in that** an apparatus for influencing the ultrasonic signal is provided on the base of the device, in particular in the recess (21).

10. The device according to Claim 9, **characterised in that** the apparatus for influencing the ultrasonic signal is configured as an edge (7).

11. The device according to Claim 9, **characterised in that** the apparatus for influencing the ultrasonic signal is configured as a layer stack (8).

## Revendications

1. Dispositif comportant un contenant et un transducteur à ultrasons (2) pour mesurer le niveau d'un liquide selon le principe de l'écho par ultrasons dans le contenant
le transducteur à ultrasons (2) étant disposé dans un boîtier (10) à distance d'une surface réfléchissante (6) et étant conçu d'une part pour rayonner sur la surface du liquide et d'autre part sur la surface réfléchissante (6),
la surface réfléchissante (6) étant disposée en dessous du transducteur à ultrasons (2) au fond du contenant pour une mesure de référence entre le transducteur à ultrasons (2) et la surface réfléchissante (6),
le transducteur à ultrasons (2) étant monté avec un groupe de bridage (20) avec une bague d'étanchéité dans une ouverture sur la face inférieure du contenant,
**caractérisé en ce que**
la surface réfléchissante (6) comporte une cavité réfléchissante de type conduit (21) au fond du contenant de telle sorte qu'un écoulement du liquide a lieu,
**en ce que** le groupe de bridage (20) comporte une surface de montage (23) pour le boîtier (10) du transducteur à ultrasons (2), et
**en ce que** la cavité réfléchissante de type conduit (21) est disposée en dessous de la surface de montage (23) .

2. Dispositif selon la revendication 1, **caractérisé en ce que** le transducteur à ultrasons (2) sert également de récepteur.

3. Dispositif selon l'une quelconque des revendications 1 ou 2, **caractérisé en ce que** le transducteur à ultrasons (2), un récepteur et une unité d'exploitation sont intégrés dans un boîtier.

4. Dispositif selon l'une quelconque des revendications précédentes, **caractérisé en ce que** des composants électroniques, notamment un circuit imprimé propre à une application, sont intégrés dans le boîtier.

5. Dispositif selon l'une quelconque des revendications précédentes, **caractérisé en ce que** le boîtier comporte une ouverture vers le haut et une ouverture vers le bas pour recevoir le transducteur à ultrasons (2).

6. Dispositif selon la revendication 5, **caractérisé en ce que** l'ouverture inférieure (13) et l'ouverture supérieure (11) sont constituées de taille différente.

7. Dispositif selon l'une quelconque des revendications 5 ou 6, **caractérisé en ce que** l'ouverture supérieure (11) et l'ouverture inférieure (13) sont dimensionnées conformément à la puissance à diffuser.

8. Dispositif selon l'une quelconque des revendications 4 à 7, **caractérisé en ce que** le boîtier comporte un système pour la saisie de la température (14).

9. Dispositif selon l'une quelconque des revendications précédentes, **caractérisé en ce qu'**un système destiné à influencer le signal d'ultrasons est prévu au fond du dispositif, notamment dans la cavité (21).

10. Dispositif selon la revendication 9, **caractérisé en ce que** le système destiné à influencer le signal d'ultrasons est constitué comme un bord (7).

11. Dispositif selon la revendication 9, **caractérisé en ce que** le système destiné à influencer le signal d'ultrasons est constitué comme un empilement de couches (8).
